# EUROPÄISCHE PATENTSCHRIFT

(11) **EP 0 660 003 B1**
(45) Veröffentlichungstag und Bekanntmachung des Hinweises auf die Patenterteilung: **14.01.1998**
(21) Anmeldenummer: 94810623.2
(22) Anmeldetag: 28.10.1994
(51) Int. Cl.: F16B 13/12

(54) **Verfahren zur Herstellung einer Spreizhülse eines Spreizdübels**
Method of manufacturing the expanding sleeve of an expansion dowel
Méthode de fabrication d'un manchon expansible pour un cheville expansible

(30) Priorität: 24.12.1993 DE 4344382
(43) Veröffentlichungstag der Anmeldung: 28.06.1995
(73) Patentinhaber: HILTI Aktiengesellschaft, 9494 Schaan (LI)
(72) Erfinder: Litscher, Walter, FL-9485 Nendeln (LI)
(74) Vertreter: Wildi, Roland

(56) Entgegenhaltungen:
- EP-A- 0 508 096
- EP-A- 0 510 906
- WO-A-90/06448
- DE-C- 2 152 729
- US-A- 3 808 938
- "Spaanloos omvormen, deel 2", Ing. J.G. Sligte, Agon Elsevier, Amsterdam/Brussel 1974, S. 109, 122

## Beschreibung

Die Erfindung betrifft ein Verfahren zur Herstellung von Spreizdübeln mit Spreizhülse, die wenigstens einen zumindest teilweise mit Längsschlitzen versehenen Spreizbereich sowie eine sich zumindest im Spreizbereich verjüngende Bohrung aufweist.

Spreizdübel der in Rede stehenden Art werden in Untergründen wie Beton, Gestein, Mauerwerk und dergleichen verankert, indem die Spreizhülse radial aufgeweitet wird. Diese radiale Aufweitung ist massgebend für die erzielbaren Verankerungswerte, da dadurch zwischen Spreizhülse und Untergrund eine Verbindung geschaffen wird, die zum einen reibschlüssigen und in gewissen Fällen auch formschlüssigen Charakter haben kann. Beeinflusst wird beispielsweise insbesondere der Anteil an reibschlüssiger Verbindung von der Grösse der dafür von der Spreizhülse zur Verfügung stehenden Oberfläche, d.h. eine geringe zur Verfügung stehende Oberfläche der Spreizhülse hat auch geringere Verankerungswerte zur Folge.

Aus der DE-PS 21 52 729 ist ein Spreizdübel bekannt, dessen Spreizhülse radial aufweitbar ist. Zum Zwecke der radialen Aufweitung ist der Spreizbereich der Spreizhülse mit Längsschlitzen versehen, so dass sich zwischen den Längsschlitzen Lappen bilden. Radial aufgeweitet wird die Spreizhülse, indem ein Spreizkörper in die sich zum vorderen Ende hin verjüngende Bohrung der Spreizhülse eingetrieben wird, so dass sich die Lappen radial nach aussen bewegen. Nach erfolgter radialer Aufweitung, d.h. wenn der Spreizdübel vollständig gesetzt ist, kann an der Spreizhülse über ein Lastangriffsmittel in Form eines Gewindes, das sich an dem dem Spreizbereich abgewandten Ende befindet, ein Teil, beispielsweise in Form einer Schraube, einer Gewindestange oder dergleichen, befestigt werden.

Der vorgenannte bekannte Spreizdübel ist beispielsweise mit vier Längsschlitzen versehen. Diese Längsschlitze werden durch spanabhebende Bearbeitung hergestellt, so dass sie in Abhängigkeit von den dafür verwendeten Werkzeugen, wie beispielsweise Scheibenfräser, eine bestimmte Breite aufweisen. Da die Breite dieser Längsschlitze von der Breite des spanabhebenden Werkzeuges abhängig ist, ist sie bei allen Grössen von Spreizdübeln aus wirtschaftlichen Gründen gleich. Dies führt dazu, dass insbesondere bei kleineren Grössen von Spreizdübeln mit einem geringen Aussendurchmesser ein wesentlicher Anteil an Oberfläche der Spreizhülse durch die Längsschlitze verloren geht. Dieser Anteil an Oberfläche steht für die Verbindung mit dem Untergrund nicht mehr zur Verfügung, so dass dadurch die erreichbaren Verankerungswerte zu gering sind. So tritt der Fall ein, dass bei kleineren Grössen von Spreizdübeln der Anteil an Oberfläche, der zur Verbindung mit dem Untergrund zur Verfügung steht, bis zu 20% reduziert wird. Verschlechtert wird die Situation insbesondere noch durch das radiale Aufweiten, weil dabei die Längsschlitze nochmals verbreitert werden.

Aus der EP-A-0 508 096 ist ein Spreizdübel mit einem Spreizkörper und einer Spreizhülse bekannt, die einen mit Längsschlitzen versehenen Spreizbereich aufweist und mit einer axialen Bohrung ausgestattet ist, die sich wenigstens über die Längserstreckung des Spreizbereichs verjüngt. Der Spreizkörper ist durch axiale Schläge in die sich verjüngende Bohrung eintreibbar, wobei der geschlitzte Spreizbereich radial aufgeweitet wird. Zur Herstellung dieses bekannten Spreizdübels werden die Längsschlitze im Spreizbereich durch Ausstanzen oder Fräsen eingebracht. Dabei kommt es zu einer Unterbrechung des Verlaufes der Materialfasem, was sich negativ auf die Festigkeitseigenschaften des Hülsenmaterials auswirken kann. Die mit Längsschlitzen und einer Bohrung versehene Spreizhülse wird über einen mit einer Spitze versehenen Dorn eines Gesenkunterteils gestülpt. Mit dem zugehörigen Gesenkoberteil wird die eine Überlänge aufweisende Spreizhülse sodann gestaucht. Dadurch wird die Innenbohrung gemäss der Form der Spitze des Doms verengt. Bei dem Stauchvorgang kommt es auch zu einer gewissen Verengung der Längsschlitze. Durch den Stauchvorgang werden im Spreizbereich die Materialfasern ineinandergeschoben. Dies kann zu unerwünschten Verfestigungen des Materials im Spreizbereich führen und zur Folge haben, dass der Spreizbereich nur sehr schwer aufweitbar ist. Bei Befestigungen in sehr hartem Untergrund kann es auch vorkommen, dass sich der Spreizbereich der Spreizhülse wegen der Materialverfestigung Unebenheiten der Bohrlochwandung nur ungenügend anpasst. Dadurch kann die Anlagefläche des Spreizbereichs deutlich verringert sein und können die Haltewerte herabgesetzt sein.

Der Umfang, in dem die Bohrung verengt wird, hängt ausser von den Materialeigenschaften der Hülse auch stark von der Form der Spitze des Dorns und von dem Längenübermass der Spreizhülse ab. Daher muss die Länge der Hülse sehr genau kontrolliert werden. Auch muss darauf geachtet werden, dass die Form des Dorns exakt auf die Überlänge abgestimmt ist, um die gewünschte Verengung zu erzielen. Das Ausmass, in dem die durch Ausstanzen oder Fräsen hergestellten Längsschlitze verengt werden, ist nur schwer kontrolllierbar. Wie der Grad der Verengung der Bohrung hängt auch die durch die Stauchung der Hülse erzielbare Verengung der Längsschlitze von den Materialeigenschaften, der Überlänge der Spreizhülse und von der Dornform ab. Für eine Verengung der Längsschlitze müssen die zwischen den Längsschlitzen verbleibenden Lappen radial aufeinander zubewegt werden. Die Spreizhülse wird jedoch nur axial gestaucht. Wie stark die Lappen einander genähert werden, ist von einer Vielzahl von Faktoren abhängig, die nicht alle in vollem Umfang kontrolliert werden können, und ist daher dem Zufall unterworfen.

Der Erfindung liegt die Aufgabe zugrunde, ein Verfahren anzugeben, das die Herstellung von zu hohen Verankerungswerten führenden Spreizdübeln ermöglicht.

Erfindungsgemäss wird dies mit einem Verfahren erreicht, bei dem zunächst die Längsschlitze durch Fliesspressen erzeugt werden und dann durch im wesentlichen radiales Zusammenpressen der zwischen den Längsschlitzen verbliebenen Lappen der Spreizhülse die Längsschlitze über einen Grossteil der Langserstreckung des Spreizbereichs geschlossen werden und die Bohrung im Spreizbereich konisch verjüngt wird.

Dank dem erfindungsgemäss vorgeschlagenen radialen Zusammenpressen der zwischen den Längsschlitzen verbliebenen Lappen der Spreizhülse werden die zuvor erzeugten Langsschlitze weitgehend geschlossen. Unter weitgehend geschlossen wird zum Beispiel auch eine Schlitzbreite von 0 bis 0,2 mm verstanden. Nebst dem Schliessen der Längsschlitze und der damit erreichten Vergrösserung der Oberfläche wird durch das im wesentlichen radiale Zusammenpressen der Lappen zudem die sich zum vorderen Ende hin verjüngende Form der Bohrung geschaffen.

Das zur Erzielung der sich verjüngenden Bohrung benötigte Material der Spreizhülse kann auch dadurch gewonnen werden, dass gemäss einer weiteren Ausführungsform der Erfindung der Spreizhülse eine erweitemde Aussenkontur verliehen wird und die Längsschlitze geschlossen werden, indem durch im wesentlichen radiales Zusammenpressen der zwischen den Längsschlitzen verbliebenen Lappen die Aussenkontur der Spreizhülse auf eine im wesentlichen zylindrische Form zurückgeführt wird.

Anstelle der spanabhebenden Erzeugung der Längsschlitze werden nach dem erfindungsgemäss angegebenen Verfahren weitere Vorteile erreicht, wenn die Längsschlitze durch Fliesspressen erzeugt werden. Dadurch wird ein ununterbrochener, die Beibehaltung einer hohen Festigkeit gewährleistender Faserverlauf erreicht.

Die Herstellung der Längsschlitze erfolgt zweckmässigerweise unter Verwendung eines mit Längsrippen versehenen Stempels. Beim Einpressen des Stempels in die Spreizhülse fliesst jener Anteil des Materiales, der von den Längsrippen verdrängt wird, rückwärts, so dass die Spreizhülse insgesamt länger wird. Bei einem nachfolgenden Verfahrensschritt kann eine Stauchung des mit Längsschlitzen versehenen Spreizbereiches erfolgen, so dass der Spreizhülse im Spreizbereich die vorgenannte, zum freien Ende hin erweitemde Aussenkontur verliehen wird. Beim dem darauffolgenden Verfahrensschritt, der Kalibrierung, wird in genannter Weise die Spreizhülse auf die zylindrische Aussenkontur zurückgeführt. Dabei wird der erweiterte Spreizbereich radial zusammengedrückt, so dass die Längsschlitze im wesentlichen spaltfrei sind. Beim radialen Zusammenpressen des Spreizbereiches wird gleichzeitig auch die Verjüngung der Bohrung erreicht.

Eine weitere Aufgabe der Erfindung besteht darin, einen Spreizdübel mit einer Spreizhülse, die im Spreizbereich Längsschlitze sowie eine sich zumindest teilweise verjüngende Bohrung aufweist, zu schaffen, mit dem hohe Verankerungswerte erzielt werden.

Erfindungsgemäss wird die Aufgabe dadurch gelöst, dass die Längsschlitze im Fliesspressverfahren hergestellt sind und über einen wesentlichen Teil der Langserstreckung des Spreizbereichs spaltfrei ausgebildet sind. Wird wie beim erfindungsgemässen Verfahren der Erzeugung Fliesspressen angewendet, so besteht die Möglichkeit, die Längsschlitze entlang ihrer gesamten Länge spaltfrei auszubilden. Werden dagegen die Längsschlitze spanabhebend, beispielsweise unter Verwendung eines Scheibenfräsers hergestellt, kann am Ende der Längsschlitze ein Bereich entstehen, der sich beim radialen Zusammenpressen der zwischen den Längsschlitzen verbliebenen Lappen der Spreizhülse nicht vollständig schliessen lässt. Da ein diesbezüglich nicht geschlossener Bereich im Verhältnis zur restlichen geschlossenen Länge der Längsschlitze relativ kurz ist, wird keine negative Beeinflussung der Verankerungswerte herbeigeführt.

Die Erfindung wird nachstehend anhand von Zeichnungen, die mehrere Ausführungsbeispiele zeigen, näher erläutert. Es zeigen:
- Fig. 1: einen erfindungsgemässen Spreizdübel, teilweise geschnitten;
- Fig. 2: eine schematische Darstellung des im Zusammenhang mit der Erzeugung der Längsschlitze angegebenen Fliesspressverfahrens.

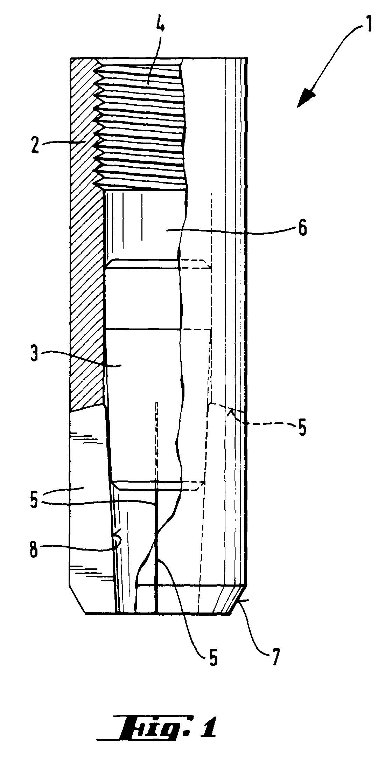

Der in Fig. 1 dargestellte Spreizdübel 1 besteht im wesentlichen aus einer Spreizhülse 2 und einem Spreizkörper 3. Die Spreizhülse 2 weist einen radial aufweitbaren Spreizbereich mit vier gleichmässig am Umfang verteilt angeordneten, spaltfrei ausgebildeten Längsschlitzen 5 auf. An dem, dem Spreizbereich 8 abgewandten Ende besitzt die Spreizhülse 2 ein Lastangriffsmittel 4 in Form eines Innengewindes. Die Längsschlitze 5 sind zum vorderen Ende hin offen ausgebildet und erstrecken sich wenigstens teilweise entlang der Spreizhülse 2. Die Spreizhülse 2 ist durchsetzt von einer zentralen Bohrung 6, die sich im Bereich der Längsschlitze 5 zum vorderen Ende hin konisch verjüngt. Innerhalb der Bohrung 6 ist ein wenigstens teilweise konisch ausgebildeter Spreizkörper 3 angeordnet. Die äussere Oberfläche der Spreizhülse 2 ist im wesentlichen glatt und am vorderen Ende mit einer umlaufend ausgebildeten Fase 7 versehen.

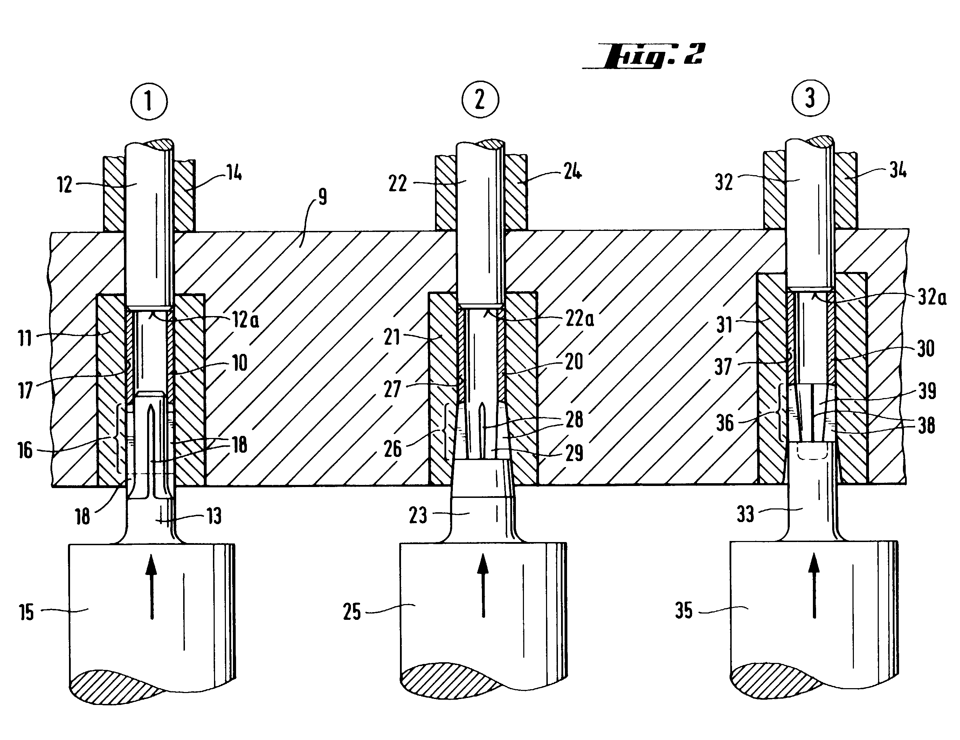

Die Fig. 2 zeigt eine schematische Darstellung der Erzeugung der Längsschlitze 28, 38 der Spreizhülsen 10, 20, 30 durch Fliesspressen. Die als Stationen 1, 2 und 3 bezeichneten Verfahrensschritte zeigen nur den im Zusammenhang mit der Erzeugung der Längsschlitze 28, 38 massgebenden Teil des gesamten Herstellverfahrens der erfindungsgemässen Spreizhülse 10, 20, 30.

Die Formgebung wird mit Hilfe von Pressmatrizen 11, 21, 31 und Stempeln 12, 13, 22, 23, 32, 33 erreicht, wobei die Pressmatrizen 11, 21, 31 in einem Aufnahmekörper 9 geführt und gehalten werden. Beidseits des Aufnahmekörpers 9 sind jeweils eine obere Führung 14, 24, 34 und eine untere Führung 15, 25, 35 angeordnet. In der oberen Führung 14, 24, 34 ist der obere Stempel 12, 22, 32 axial verschieblich gelagert. Die untere Führung 15, 25, 35 ist axial versetzbar und nimmt den unteren Stempel 13, 23, 33 auf.

Die Pressmatrize 11 der Station 1 hat eine zentrale, zylindrische Aufnahmebohrung 17, in der sich die weiters umzuformende Spreizhülse 10 befindet, die mit einem ersten hinteren Ende an der Stirnseite 12a des teilweise in die Aufnahmebohrung 17 ragenden oberen Stempels 12 anliegt. Durch das vordere Ende der Spreizhülse 10 wird der untere Stempel 13 getrieben, der an seiner Aussenkontur radial abragende Längsrippen 18 aufweist. Beim Eintreiben des unteren Stempels 13 erzeugen die Längsrippen 18 nicht dargestellte Längsschlitze in der Spreihülse 10. Das dabei verdrängte Material fliesst rückwärts, so dass eine axiale Verlängerung der Spreizhülse 10 erfolgt. Die Längsschlitze unterteilen den Spreizbereich 16 in einzelne Lappen.

Den nächsten Verfahrensschritt, den die Spreizhülse 20 durchläuft, ist als Station 2 bezeichnet. In der Pressmatrize 21, die eine sich zu der unteren Führung 25 hin konisch erweiternde Aufnahmebohrung 27 hat, ist die von Station 1 kommende Spreizhülse 20 mit zylindrischer Aussenkontur gelagert. Die Spreizhülse 20 liegt mit einem ersten hinteren Ende an der Stirnseite 22a des teilweise in die Aufnahmebohrung 27 ragenden oberen Stempels 22 an.

Beim Einpressen des unteren, sich zum freien Ende hin wenigstens teilweise konisch verjüngenden Stempels 23 wird die Spreizhülse 20, insbesondere die Lappen 29, axial gestaucht, so dass das beim Stauchvorgang verdrängtes Material radial nach aussen in den konisch erweiterten Bereich der Aufnahmebohrung 27 fliesst. Durch die axiale Stauchung erfährt die Spreizhülse 20 eine axiale Verkürzung und einen konisch erweiterten Spreizbereich 26 mit Längsschlitzen 28.

Ein weiterer Verfahrensschritt erfolgt auf Station 3. In die, grösstenteils mit einer zylindrischen Aufnahmebohrung 37 versehene Pressmatrize 31 ist die zuvor auf Station 2 bearbeitete Spreizhülse 30 vom unteren Stempel 33 einpressbar. Bei diesem Verfahrensschritt wird der zuvor angestauchte, erweiterte Spreizbereich radial zusammengedrückt, so dass die Spreizhülse 30 eine im wesentlichen zylindrische Aussenkontur bekommt. Die Bohrung 39 verjüngt sich dabei konisch zum vorderen Ende hin. Nach dem Erreichen der Endlage in der Aufnahmebohrung 37 der Pressmatrize 31 liegt die Spreizhülse 30 mit einem ersten hinteren Ende an der Stirnseite 32a des teilweise in die Aufnahmebohrung 37 ragenden oberen Stempels 32 an. Beim radialen Zusammendrücken des Spreizbereiches 36 werden die zuvor durch Längsfliesspressen erzeugten Längsschlitze 38 weitgehend spaltfrei zusammengepresst, so dass die Breite der Längsschlitze 38 0 mm bis 0,2 mm beträgt.

Die Umformung der Spreizhülse 2, 10, 20, 30 kann durch Kaltfliesspressen oder durch Halbwarmfliesspressen bei Temperaturen von 200° bis 300° Celsius erfolgen.

## Patentansprüche

1. Verfahren zur Herstellung von Spreizdübeln mit einer Spreizhülse (2, 10, 20, 30), die einen mit Längsschlitzen (5, 28, 38) versehenen Spreizbereich (8, 16, 26, 36) aufweist und mit einer Bohrung (6, 39) ausgestattet ist, die sich wenigstens über die Längserstreckung des Spreizbereichs (8, 16, 26, 36) verjüngt, und einem Spreizkörper (3), der durch axiale Schläge in die sich verjüngende Bohrung (6, 39) eintreibbar ist, **dadurch gekennzeichnet**, dass ausgehend von einer mit einer zylindrischen Bohrung (6, 39) versehenen Spreizhülse zunächst im Fliesspressverfahren die Längsschlitze (5, 28, 38) erzeugt werden und danach unter im wesentlichen radialem Zusammenpressen der zwischen den Längsschlitzen (5, 28, 38) verbliebenen Lappen der Spreizhülse (2,10, 20, 30) die Bohrung (6, 39) im Spreizbereich (8, 16, 26, 36) konisch verjüngt wird und die Längsschlitze (5, 28, 38) über einen Grossteil der Längserstreckung des Spreizbereichs (8, 16, 26, 36) geschlossen werden.

2. Verfahren nach Anspruch 1, dadurch gekennzeichnet, dass der Spreizhülse (2, 10, 20, 30) eine erweitemde Aussenkontur verliehen wird und die Längsschlitze (5, 28, 38) geschlossen werden, indem durch im wesentlichen radiales Zusammenpressen der zwischen den Längsschlitzen (5, 28, 38) verbliebenen Lappen die Aussenkontur der Spreizhülse (2, 10, 20. 30) auf eine im wesentlichen zylindrische Form zurückgeführt wird.

3. Verfahren nach Anspruch 1 oder 2, dadurch gekennzeichnet, dass die Längsschlitze (5, 28, 38) unter Verwendung eines mit Längsrippen (18) versehenen Stempels (13) durch Fliesspressen erzeugt werden.

4. Spreizdübel mit einer Spreizhülse (2, 10, 20, 30), die einen mit Längsschlitzen (5, 28, 38) versehenen Spreizbereich (8, 16, 26, 36) aufweist und mit einer Bohrung (6, 39) ausgestattet ist, die sich wenigstens über die Längserstreckung des Spreizbereichs (8, 16, 26, 36) verjüngt, und einem Spreizkörper (3), der durch axiale Schläge in die sich verjüngende Bohrung (6, 39) eintreibbar ist, **dadurch gekennzeichnet**, dass die Längsschlitze (5, 28, 38) im Fliesspressverfahren hergestellt sind und über einen wesentlichen Teil der Längserstreckung des Spreizbereichs (8, 16, 26, 36) spaltfrei ausgebildet sind.

5. Spreizdübel nach Anspruch 4, dadurch gekennzeichnet, dass die Längsschlitze (5, 28, 38) entlang ihrer gesamten Länge spaltfrei ausgebildet sind.

## Claims

1. Process of manufacturing expansion dowels with an expansion sleeve (2, 10, 20, 30), comprising an expansion area (8, 16, 26, 36) provided with longitudinal slots (5, 28, 38) and with a bore (6, 39) which narrows at least over the longitudinal extent of the expansion area (8, 16, 26, 36), and an expansion body (3) which is driven into the narrowing bore (6, 39) by axial blows, **characterised in that**, based on an expansion sleeve provided with a cylindrical bore (6, 39), initially the longitudinal slots (5, 28, 38) are produced in a flow moulding process, and thereafter the bore (6, 39) is conically narrowed in the expansion area (8, 16, 26, 36) under essentially radial compression of webs of expansion sleeve (2, 10, 20, 30), which remained between the longitudinal slots (5, 28, 38), and the longitudinal slots (5, 28, 38) are closed over a large portion of the longitudinal extent of the expansion area (8, 16, 26, 36).

2. Process according to Claim 1, **characterised in that** the expansion sleeve (2, 10, 20, 30) is given an extending outside contour and the longitudinal slots (5, 28, 38) are closed in that the outside contour of the expansion sleeve (2, 10, 20, 30) is returned to an essentially cylindrical form by essentially radial compression of webs of the outside contour of the expansion sleeve (2, 10, 20, 30), which remained between the longitudinal slots (5, 28, 38).

3. Process according to Claim 1 or 2, **characterised in that** the longitudinal slots (5, 28, 38) are produced by way of flow moulding by using a stamp (13) which is provided with longitudinal webs (18).

4. Expansion dowel with an expansion sleeve (2, 10, 20, 30), comprising an expansion area (8, 16, 26, 36) provided with longitudinal slots (5, 28, 38) and with a bore (6, 39) which narrows at least over the longitudinal extent of the expansion area (8, 16, 26, 36), and an expansion body (3) which is driven into the narrowing bore (6, 39) by way of axial blows, **characterised in that** the longitudinal slots (5, 28, 38) are manufactured in a flow moulding process and designed to be free of gaps over a substantial portion of the longitudinal extent of the expansion area (8, 16, 26, 36).

5. Expansion dowel according to Claim 4, **characterised in that** the longitudinal slots (5, 28, 38) are arranged gapfree along their entire length.

## Revendications

1. Procédé de fabrication de chevilles à expansion, comprenant une douille expansible (2, 10, 20, 30) présentant une section d'écartement (8, 16, 26, 36) avec des fentes longitudinales (5, 28, 38) et pourvue d'un alésage (6, 39) qui se rétrécit au moins sur l'extension longitudinale de la section d'écartement (8, 16, 26, 36), et un corps d'écartement (3) qui peut être enfoncé par des frappes axiales dans l'alésage (6, 39) se rétrécissant, **caractérisé en ce** que, en partant d'une douille expansible munie d'un alésage (6, 39) cylindrique, les fentes longitudinales (5, 28, 38) sont tout d'abord produites par un procédé de formage par fluage, après quoi, avec compression sensiblement radiale des pattes de la douille expansible (2, 10, 20, 30) subsistant entre les fentes longitudinales (5, 28, 38), l'alésage (6, 39) est rétréci de manière conique dans la section d'écartement (8, 16, 26, 36) et les fentes longitudinales (5, 28, 38) sont fermées sur la majeure partie de l'extension longitudinale de la section d'écartement (8, 16, 26, 36).

2. Procédé selon la revendication 1, caractérisé en ce qu'on confère la douille expansible (2, 10, 20, 30) un contour extérieur qui s'élargit et que les fentes longitudinales (5, 28, 38) sont fermées par le fait que, avec compression sensiblement radiale des pattes subsistant entre les fentes longitudinales (5, 28, 38), le contour extérieur de la douille expansible (2, 10, 20, 30) est ramené à une forme sensiblement cylindrique.

3. Procédé selon la revendication 1 ou 2, caractérisé en ce que les fentes longitudinales (5, 28, 38) sont produites par formage par fluage avec utilisation d'un poinçon (13) muni de nervures longitudinales (18).

4. Cheville à expansion, comprenant un douille expansible (2, 10, 20, 30) présentant une section d'écartement (8, 16, 26, 36) avec des fentes longitudinales (5, 28, 38) et pourvue d'un alésage (6, 39) qui se rétrécit au moins sur l'extension longitudinale de la section d'écartement (8, 16, 26, 36), et un corps d'écartement (3) qui peut être enfoncé par des frappes axiales dans l'alésage (6, 39), **caractérisé en ce** que se rétrécissant les fentes longitudinales (5, 28, 38) sont produites par un procédé de formage par fluage et qu'elles sont exemptes de fentes sur une partie importante de l'extension longitudinale de la section d'écartement (8, 16, 26, 36).

5. Cheville à expansion selon la revendication 4, caractérisée en ce que les fentes longitudinales (5, 28, 38) sont dépourvues de fentes sur toute leur longueur.
